# EUROPEAN PATENT SPECIFICATION

(11) **EP 0 246 930 B1**
(45) Date of publication and mention of the grant of the patent: **29.12.1993**
(21) Application number: 87304640.3
(22) Date of filing: 26.05.1987
(51) Int. Cl.: B60J 3/02

(54) **Visor system**
Blendschutzbauart
Système de pare-soleil

(30) Priority: 23.05.1986 US 866272
(43) Date of publication of application: 25.11.1987
(73) Proprietor: PRINCE CORPORATION, Holland Michigan 49423 (US)
(72) Inventor: Hemmeke, Ronald Lee, Holland Michigan 49423 (US); Spykerman, Scott Alan, Holland Michigan 49423 (US)
(74) Representative: Kearney, Kevin David Nicholas

(56) References cited:
- EP-A- 0 223 522
- DE-A- 3 442 321
- DE-U- 1 911 384
- DE-U- 8 114 028
- FR-A- 2 497 157
- US-A- 2 261 881
- US-A- 2 492 074
- US-A- 2 517 872
- US-A- 2 823 950
- US-A- 3 499 679
- US-A- 3 617 088
- US-A- 3 649 068
- US-A- 4 227 241
- US-A- 4 468 062
- US-A- 4 486 819

## Description

The present invention pertains to vehicle visors and particularly to a mounting system for a visor.

Conventional automotive visors are installed such that they can pivot from a lowered use position adjacent the windshield to a side window if the sun is entering the vehicle from the side. When driving along a curved highway, it may be necessary to frequently move the visor from the windshield to the side window position while driving. This can not only be burdensome, but when ducking under the visor as it is moved, the driver's attention is distracted, creating a potentially hazardous driving situation.

In order to provide simultaneous side and front window shade, visor systems have been proposed which employ a primary conventional visor and a secondary or auxiliary visor. US-A-2,261,881; US-A-2,492,074; US-A-2,517,872; US-A-2,823,950; and US-A-3,499,679 are representative of such structures. In these structures, an auxiliary visor is provided and is coupled directly to the primary visor through a pivot connection such that it can be moved to a variety of locations providing sun blocking along more than one axis of incident sunlight. Some prior art suggests providing conventional visors with sliding sleeves for blocking sunlight. US-A-3,617,088 and US-A-3,649,068 are representative of this "add-on" approach. Other visor systems provide separate side window visors which are permanently mounted above the side windows. US-A-4,468,062, is representative of a side window visor installation.

EP-A-0223522 discusses a visor system including a pair of spaced mounting brackets to support a first visor which is movable between a raised, stored position and a lowered use position. The first visor can also be moved to a side window for providing incident light from the side. The brackets also support an auxiliary visor which is pivoted on an axis located above the vehicle windshield between a raised stored position and a lowered use position. The auxiliary visor comprises an exterior housing and a slidable panel which can be pulled out of the housing to extend the length of the visor. EP-A-0223522 was published after the priority date of the present invention and is irrelevant to the inventive step of the present invention since it falls within Article 54(3) and (4) of the European Patent Convention.

According to the present invention there is provided a vehicle visor system according to Claim 1 which differs from the vehicle visor system of EP-A-0 233 522 merely by spring-biasing and holding means comprising a spring clip extending between the axle means and the brackets for producing a spring-actuated snap-up movement of the second visor.

The present invention provides improved visor mounting brackets which support at least one visor panel for spring-actuated, snap-up storage against a vehicle roof. In the preferred embodiment, the mounting brackets adjustably support a first visor movable between a raised stored position and a lowered use position. The visor also can be moved to a side window for providing protection against incident light from the side. The brackets also include bias means which cooperate with the pivot axle of an auxiliary (or second) visor which is selectively urged by the bias means toward a raised stored position and releasably held in such position. The auxiliary visor preferably includes a pair of panels with a first panel mounted to the brackets to be spring-actuated to a raised stored position and a second panel slidably mounted to the first panel by interlocking arm means which permits the second panel to be extended from either side of the first panel.

With such a system, the auxiliary visor can become the primary windshield visor with the sliding panel selectively movable to either side to block light while the primary visor is moved to the side window position. Alternatively, when only a front visor is necessary, the primary visor can be used independently of the auxiliary visor. The system provides a compact and attractive visor installation which has the clean, trim appearance of a single visor installation and improved flexibility and operation.

The invention may be carried into practice in various ways and one specific embodiment will now be described, by way of example, with reference to the drawings, in which
Figure 1 is a front elevational view of a passenger side visor installation embodying the present invention shown with both visor panels in a raised stored position;
Figure 2 is a front elevational view of the structure shown in figure 1 with the primary visor shown in a lowered, forward windshield use position;
Figure 3 is a front elevational view of the structure shown in figure 1 shown with the primary visor lowered and pivoted to cover the side window for use in blocking light incident from the side of the vehicle;
Figure 4 is a front elevational view of the structure shown in Figure 1 with the primary visor shown in the position shown in Figure 3 and the auxiliary visor shown in a lowered use position.
Figure 5 is a front elevational view of the structure shown in Figure 4 with the sliding panel associated with the auxiliary visor extended to the right shown in solid lines or alternatively to the left--as shown phantom lines;
Figure 6 is an enlarged front elevational view of the inside of the auxiliary visor body;
Figure 7 is a front elevational view of the inside of the sliding panel associated with the auxiliary visor body shown in Figure 6;
Figure 8 is cross-sectional view of the auxiliary visor body taken along section line VIII-VIII of Figure 6;
Figure 9 is a cross-sectional view of the right end visor rod taken along section line IX-IX in Figure 6;
Figure 10 is an enlarged fragmentary cross-sectional view of the top edge of the auxiliary visor body taken along section line X-X of Figure 6;
Figure 11 is an enlarged fragmentary cross-sectional view of a side edge of the auxiliary visor body taken along section line XI-XI of Figure 6;
Figure 12 is a right side elevational view of the structure shown in Figure 6;
Figure 13 is a cross-sectional view of the visor panel taken along section line XIII-XIII of Figure 7;
Figure 14 is an end view of a spring clip employed in mounting the auxiliary visor body to the mounting brackets;
Figure 15 is a perspective view of the clip shown in Figure 14;
Figure 16 is an exploded plan view of the right side mounting bracket and clip shown in Figures 1-5;
Figure 17 is a cross-sectional view of the bracket taken along section line XVII-XVII of Figure 16;
Figure 18 is a right end elevational view of the visor rod and clip receiving portion of the bracket shown Figure 17;
Figure 19 is a front elevational view of the left side visor mounting bracket shown in Figures 1-5;
Figure 20 is a right side elevational view of the bracket shown in Figure 19;
Figure 21 is a fragmentary cross-sectional assembly view of the visor rod receiving portion of the bracket shown in Figures 16-20 and an installed clip shown in Figures 14 and 15;
Figure 22 is an enlarged fragmentary cross-sectional view of the auxiliary visor body and panel showing the interlocking arms.

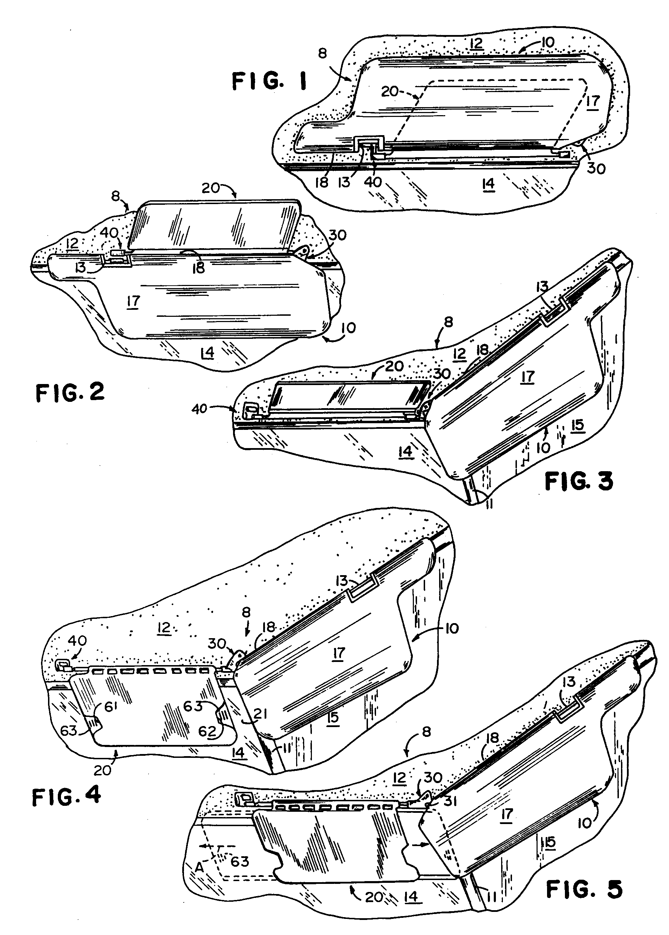

Referring intially to Figures 1-5, there is shown the preferred embodiment of the invention which is shown installed in a vehicle on the passenger (right) side. The visor system 8 comprises a first or primary visor 10 and a second or auxiliary visor 20. Both visors 10 and 20 are coupled between a first mounting bracket 30 and a second mounting bracket 40 which are mounted in spaced relationship to the roof 12 of a vehicle above its windshield (windscreen) 14. In the embodiment shown, the passenger side visor system is mounted to the left of the "A" pillar 11 of the vehicle which extends between the windshield 14 and a right side window 15.

As seen in the progression of the visor positions, shown in Figures 1-5, the first visor 10 operates in the nature of a conventional visor, movable between a raised stored position, shown in Figure 1, to a lowered windshield position, as illustrated in Figure 2. The visor can then be moved to a side-window blocking position shown in Figures 3-5. The second or auxiliary visor panel 20 is held by spring clips in the brackets 30 and 40 in a raised stored position against the roof 12 and can be lowered for use as illustrated in Figures 4 and 5. When both visors 10 and 20 are in a raised stored position, as illustrated in Figure 1, the auxiliary visor 20 is concealed between the visor 10 and the roof or headliner 12 of the vehicle; and, therefore, the system appears substantially the same as a conventional visor installation. Having briefly described the operation of the visor system, a detailed description of the visor system is now presented.

The first or primary visor 10 may include an illuinated mirror package of the type described in US-A-4,227,241 or a slide-out illuminated vanity mirror package as described in US-A-4,486,819. Alternatively, the visor can be a standard blank visor as illustrated. The visor 10 includes a polymeric core covered by a suitable upholstery material 17 to conform the visor to the interior decor of the vehicle in which it is installed. A visor pivot rod extends within the visor core adjacent a top edge 18 thereof to permit the visor to pivot on the visor rod for movement between a raised stored position and a lowered use position as illustrated in Figures 1 and 2, respectively. The visor pivot rod and its connection within the body of a visor such as visor 10 is disclosed in detail in US-A-4,500,131. The visor pivot rod is itself conventional and forms no part of the present invention other than providing a pivotal interface between the visor body 10 and the pivot rod extending from an end thereof which includes an elbow which is pivotally coupled to the mounting bracket 30.

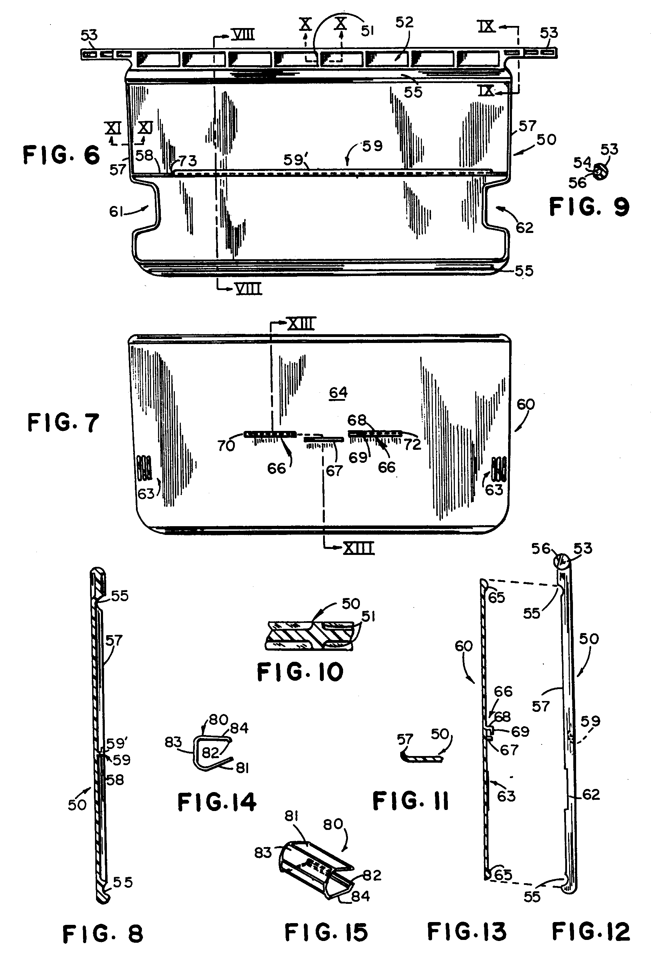

The auxiliary visor 20 of the preferred embodiment of the invention includes a visor body 50 (Figure 6) which slidably receives an auxiliary sliding panel 60 (Figure 7) which can be moved from a stored position illustrated in Figure 4, substantially coextensive and aligned with the body 50, to a first extended position, illustrated in Figure 5 in solid lines, in which the auxiliary panel 60 extends immediately adjacent the "A" pillar 11 of the vehicle, filling in the gap 21 shown in Figure 4. The panel 60 can also be moved to the left as indicated by the arrow A in Figure 5 and as shown in phantom lines. Thus the auxiliary visor 20 provides an adjustable width visor with a bilaterally-sliding panel to selectively block direct sunlight or reflections as required. The construction of the auxiliary visor 20 comprising the body 50 and the auxiliary sliding panel 60 is now described particularly in conjunction with Figures 6-13.

Both the body 50 and the sliding panel 60 are generally rectangular shaped as seen in Figures 6 and 7, and preferably are integrally moulded of an opaque suitable polymeric material such as polycarbonate. The body 50 integrally includes, along its upper edge, a section defining a pivot rod 52 with a plurality of spaced integral ribs 51 (Figure 10). The rod 52 terminates at opposite ends in D-shaped cross section stub axles 53 which, as described below, fit within keyed openings of each of the brackets 30 and 40 and are engaged by spring clips 80, shown in Figures 14 and 15, for urging and holding the visor 20 in the stored position shown in Figures 1-3 as the visor is manually rotated toward and to within about 30° of its stored position. It is noted here that Figures 6 and 7 show the inside facing surfaces of the members 50 and 60 with the outside surfaces being shown in Figures 4 and 2, respectively.

The body 50 also includes a pair of spaced generally parallel semicylindrical guide channels 55 formed inwardly from but near the top and bottom edges of the body as best seen in Figures 6 and 12. The guide channels 55 receive complementary shaped parallel projections 65 on the panel 60 for guiding, partially supporting and aligning the panel 60 with respect to the body 50 as it slides between its adjusted positions. As seen in Figure 6, the channels 55 extend the full width of the body 50.

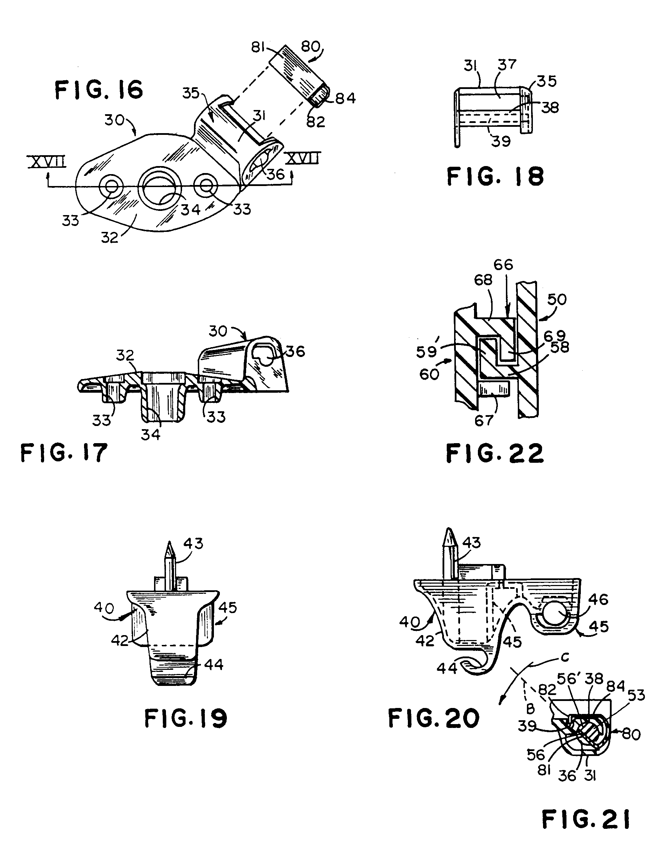

As best seen in Figure 9, each of the axles or end posts 53 can include a plurality of spaced reliefs 54 with the peripheral edges, however, defining a flat 56 which aligns with a spring clip section 81 when the visor is in a raised stored position (Figure 21) and the edges of which cam the visor toward the stored position as described in greater detail below. The opposite peripheral edges of the body 50 include a reinforcing lip 57, as best seen in Figure 11, to add rigidity to the body. The edges 57 also serve as stop means in cooperation with the sliding panel 60 to limit the lateral extension of the sliding panel by engaging outer edges 70 and 72 of arms 66 (to be described later) and best seen in Figure 7.

Approximately along the longitudinal centreline of the body 50 there is provided an L-shaped arm 59, as best seen in Figure 8, having a horizontally outwardly-extending segment 58 which extends between the lips 57, as best seen in figure 6, and a vertically upwardly-extending segment 59' which extends partially along the width of the body 50. As seen in Figure 6, a segment 59' terminates at a greater distance from the left end, as viewed in Figure 6, than it does at the right end to define a slot 73 to permit assembly of the panel 60 to the body 50 as will be described in greater detail below. The function of the member 59 comprising the integral elements 58 and 59' is twofold. The elongated outer surface of the member 58 engages the inner surface 64 of the panel 60 to provide sliding support therebetween and prevent rattling between the two panel-shaped members, while the vertically extending segment 59' interlocks with the locking arms of the panel 60 for holding the two elements together. The side edges of the body 50 include notches 61 and 62 which provide access to thumb tabs 63 (Figure 7) of the sliding panel 60.

The sliding panel 60 is also a generally flat rectangular panel like the body 50 and, as previously indicated, includes upper and lower longitudinally-extending parallel spaced rounded projections 65 which are of complementary dimension and shape to the channels 55 and slidaby fit therein for guiding the edges of the panel 60 along the inner surface of the body 50. The panel 60 includes three vertically-extending spaced parallel raised projections 63 located along the edge near the lower half of the panel and which, as seen in Figure 4, are positioned in alignment with the notches 61 and 62 to permit easy gripping of the edges of panel 60 for sliding the panel with respect to the body 50. On the inner surface 64 of the panel 60 there is provided interlocking arms comprising a pair of downwardly-projecting L-shaped arms 66 positioned in spaced relationship along the general longitudinal centreline of the panel 60 with a straight rectangular bar 67 positioned therebetween and in horizontally-spaced relationship as best seen in Figure 7. Each of the downwardly depending L-shaped arms 66 includes an outwardy projecting segment 68 and a downwardly projecting segment 69 with adjacent outer ends 70 and 72 which, when installed as described below, selectively engage the lips 57 on the body 50 to limit the travel of the panel 60 so that it does not become disengaged from the body 50 during use.

The length of each of the members 66 in the preferred embodiment is approximately 1.4 inches (3.6 cm) for the panel 60 which has an overall width of 11 inches (28 cm), and the width is selected such that the downwardly-extending segment or lip 69 of the left arm 66, as viewed in Figure 7, will fit within the notch 73 (Figure 6) between the lip 57 of the body 50 and the end of arm 59 and particularly the leg 59' thereof for assembly of the two panels. The bar 67 positioned intermediate the arms 66 engages a side opposite the outwardly-extending segment 58 of the arm 59, as best seen in Figure 22, with the L-shaped arm 66 interlocking with arms 59, as also best seen in Figure 22, which is a cross-sectional view through one of the members 66 with the panel 60 installed on the body 50. Sufficient clearance is provided to assure that the desired interlocking and, therefore, holding of the two panels with their interfaces adjacent one another is provided and yet smooth sliding operation is permitted with rattle-free operation assured also by the guide channels 55 cooperating with the projections 65.

The assembly of the panel 60 to the body 50 is provided by facing the inner surfaces of the two members and aligning the left arm 66 (as viewed in Figure 7) with notch or slot 73 and sliding the panel until the arm 66 interlocks with the arm 59. Subsequently, the sliding panel 60 is moved with respect to the body 50 until the bar 67 slides under the leg 58. The somewhat flexible panel 60 is advanced until the second arm 66 interengages the arm 59 and the edge 72 of the second leg 66 of the panel 60 clears the lip 57, after which both panels assume their normal undeflected configuration, and the edges 70 and 72 will selectively engage the lips 57 to limit the subsequent opposed sliding motion of the panel 60 within the body 50. Once assembled, typically there is no need to disassemble the panel 60 from the body 50; however, this can be achieved by pulling the panel 60 toward the gap 73 and lifting the edge 72 above the lip 52 and subsequently slding the panel 60 outwardly therefrom while raising it away from the body 50. The guide channels 55 may alternatively be formed as the panel 60 with the projections 65 on the body 50 as long as the sliding guiding interface is provided. Also, any generally concave and convex shape other than the preferred semi-cylindrical shape can be employed as the long as sufficient depth for interengagement is provided to resist skewing of the panel 60 from the body 50 away from the longitudinal axis of these elongated members. The assembled visor 20 is mounted to the described mounting brackets and spring clips to provide the snap-up storing and holding operation now to be described in connection with Figures 14-21.

The mounting bracket 30 is cast or moulded of a suitable material such as a zinc alloy. the bracket 30 includes a body 32 having a pair of recessed stepped mounting apertures 33 spanning opposite sides of a tapered central aperture 34 for receiving an elbow end 31 (Figure 5) of the visor pivot rod for the visor 10. The elbow end is held within the tapered aperture 34 by conventional means such as a spring and locking nut. Integrally moulded to the body 32 is a rod-end and spring-clip receiving boss 35 which is aligned, when the bracket 30 is secured to the vehicle as shown in Figures 1-5, to be above and generally parallel to the upper edge of the windshield 14 with a centrally-extending longitudinal configurated aperture 36 shaped to receive one of the spring mounting clips 80 through a slot 37 formed laterally of the aperture 36 and communicating therewith, as is best seen in Figure 18. The boss 35 includes a lower support floor 38 which includes, as perhaps best seen in the installed inverted view of Figure 21, an elongated ledge 39 formed therein over which a locking edge 82 of the clip 80 is extended for holding the clip to the bracket.

The clip 80 (Figure 14-16) is a generally C-shaped clip made of spring metal and having a length of approximately one inch (2.5 cm) with a first generally flat end segment 81 which extends across a chordal segment of the generally cylindrical aperture 36, as best seen in Figure 21, to engage the flat surface 56 of the stub axle 53 which is extended within the aperture 36. The segment 81 is coupled integrally by a curved wall 83 and a top wall 84 to the locking edge 82, in a generally C-shaped configuration as best seen in Figure 14. The clip is installed, as illustrated in Figure 16, by sliding the clip forwardly into the slot 37 with the surface 81 extending under the top surface 31 of the boss 35 and with the lower leg 84 extending over the support leg 38 until the locking lip 82 snaps over the ledge 39 to hold the clip in place.

The mounting bracket 40 is moulded of a resilient polymeric material such as a polycarbonate and includes a mounting boss 45 which is of substantially identical construction but which has an opening 46 which faces toward and is axially aligned with the opening 36 in the bracket 30 when the brackets are installed. The bracket 40 includes a front section 42 which includes an open elongated cylindrical socket 44 for releasably receiving a secondary support rod 13 of the primary visor 10 as seen in Figure 1-5. The base of the bracket 40 includes a locator pin and flange 43 which extends within an aperture formed in the sheet metal portion of the roof 12 and a recessed screw receiving aperture 45 for conventionally securing the bracket 40 to the roof of the vehicle. The clip receiving boss 45, other than having opening 46 in an opposite direction from the boss 35 of the bracket 30, is of substantially identical construction, and reference to Figures 18 and 21 is to be made for the relationship of the structural elements thereof to receive a clip 80 which is similarly positioned within the clip receiving boss 45 of the bracket 40.

With the spring biassing clips 80 located in each of the brackets 30 and 40, the brackets are positioned over the stub ends 53 of the visor 20; and with the visor 20 attached to the brackets, the system is ready for installation in a vehicle. As best seen in Figure 21, which shows the mounting boss 35 or 45 in the position in which it would be installed in a vehicle, the flat 56 on the left stub axle 35 of the visor 20 is shown which cooperates with the spring clip leg 81 to hold the visor in the plane indicated by the dashed ine B which is approximately the angle of the roof liner 12 above the windshield 14. As can be appreciated, as the visor 20 is lowered by rotation in a counterclockwise direction, as shown in Figure 21 by the arrow C, the upper left corner 56' of the stub axle 53 urges against the leg 81 of the clip 80 expanding the clip which provides a compressive force against the remaining cylindrical surface of the axle 53 for holding the visor 20 in a selected lowered position. As the visor is returned toward the stored position against the vehicle headliner, the now expanded spring clip 80 provides a force against the edge 56' of each of the stub axles 53 which tends to rotate the visor in a direction opposite arrow C toward the stored postion indicated by plane B in Figure 21. Thus, with the described mounting brackets, the auxiliary visor 20 is urged toward the stored position, illustrated in Figures 1-3, and held in the stored position by the resilient spring clips 80.

Once the primary visor 10 is lowered and moved to the side, as shown in Figure 3, the auxiliary visor 20 can be lowered from its stored position, as seen in Figures 1-3, in which it is hidden behind the visor 10 when stored, to a lowered use position as shown in Figure 4. The auxiliary visor panel 60 can be extended to either side as necessary to fill the gap 21 between the visors 10 and 20 or between the vehicle's rearview mirror and the body 50 by grasping the tabs 63 and extending the panel 60 as shown in Figure 5. Thus the use of the panel 60 effectively provides a variable width auxiliary visor 20 which cooperates with the primary visor to block incident light from interfering with the driver's or passenger's vision. Although a passenger side installation is shown, it is understood that the driver's side installation is essentially the same with the parts reversed.

## Claims

1. A vehicle visor system including first (10) and second (20) visors mounted to a pair of brackets (30,40) which are adapted to be mounted in spaced relationship above a vehicle window (14); wherein the second visor (20) includes a generally planar body (50) and axle means (53) extending from opposite sides of the body near a top edge thereof; and bias and holding means comprising a spring clip extending between the axle means (53) and the brackets (30,40) to urge the second visor (20) for spring-actuated snap-up movement to a raised stored position adjacent the vehicle roof and to hold the second visor in a selected lowered use position.

2. A visor system as claimed in Claim 1 in which each of the brackets (30,40) includes a housing (35,45) having an axle receiving generally cylindrical first aperture (36,46) therein, and a second aperture (37,-) extending transversely to the axle-receiving aperture and communicating therewith for receiving the bias and holding means.

3. A visor system as claimed in Claim 2 in which the bias and holding means comprises a generally C-shaped elongate spring clip (80), shaped for fitting within the second aperture (37,-) of the housing (35,45).

4. A visor system as claimed in Claim 3 in which the clip (80) includes a leg (81) extending across a chordal segment of the first aperture (36), and in which the axle means (53) includes a flat (56) which is aligned with the leg of the clip when the second visor (20) is in the stored position.

5. A visor system as claimed in Claim 4 in which an end of the clip (80) remote from the leg (81) includes an inwardly projecting lip (82) received on a ledge (39) of the housing, thereby securing the clip to the bracket.

6. A visor system as claimed in any one of the preceding claims including a panel (60) mounted to the body (50) for sliding movement along an axis parallel to a longitudinal axis of the second visor (20) between a stored position at least partially aligned with the body and use positions in which the panel (60) extends from a selected side of the body.

7. A visor system as claimed in any one of the preceding claims in which each of the brackets (30,40) includes an additional aperture for receiving support members of the first visor (10) such that both the second visor (20) and the first visor (10) are supported by the brackets.

8. A visor system as claimed in any one of the preceding claims when dependent upon Claim 6 in which the panel (60) is mounted to the body (50) by interlocking arm means (66,59) extending from facing surfaces of the body and the panel and engaging one another to hold the panel and the body together.

9. A visor system as claimed in any one of the preceding claims when dependent upon Claim 6 in which the panel (60) is mounted to the body (50) by a generally concave channel (55) in one of the body (5) or panel (60) along the direction of sliding movement, and a complementary generally convex projection (65) in the other of the body or panel and arranged to engage the channel to provide a sliding guide therebetween.

10. A visor system as claimed in Claim 9 in which the channel (55) and the projection (65) are generally semicylindrical.

11. A visor system as claimed in Claim 9 and Claim 10 in which a pair of spaced parallel semicylindrical channels (55) and a corresponding pair of spaced parallel projections (65) are provided.

12. A visor system as claimed in Claim 11 in which the channels and projections are formed adjacent opposite edges of the second visor (20).

13. A visor system as claimed in any one of Claims 9 to 12 in which the channel (55) is formed in the body (50) and the projection is formed in the panel (60).

14. A visor system as claimed in any one of the preceding claims in which the first visor (10) is pivotally coupled to one of the brackets (30) for movement in a generally horizontal direction to selectively provide sun blocking for a side window (15).

## Patentansprüche

1. Kraftfahrzeug-Blendschutzsystem mit einer ersten (10) und einer Zweiten (20) an einem Paar Halterungen (30,40) befestigten Sonnenblende, wobei die Halterungen geeignet sind, beabstandet über einem Kraftfahrzeugfenster (14) angebracht zu werden, wobei die zweite Sonnenblende (20) einen im wesentlichen ebenen Hauptteil (50) und eine Achseinrichtung (53), die sich von gegenüberliegenden Seiten des Hauptteils nahe einer seiner oberen Kanten aus erstreckt, aufweist, und eine Neigungs- und Halteeinrichtung mit einem Federbügel, der sich zwischen der Achseinrichtung (53) und den Halterungen (30,40) erstreckt, um eine selbstschließende Schnapp-Bewegung der zweiten Sonnenblende (20) nach oben in eine gehobene, gelagerte, am Kraftfahrzeugdach anliegende Position zu bewirken, und die zweite Sonnenblende in einer gewählten herabgelassenen Benutzungsstellung zu halten.

2. Blendschutzsystem nach Anspruch 1, bei dem jede der Halterungen (30,40) ein Gehäuse (35,45) aufweist, mit einer achsaufnehmenden, im wesentlichen zylindrischen ersten Öffnung (36,46) und einer zweiten Öffnung (37,-), die sich quer zur achsaufnehmenden Öffnung erstreckt und mit dieser zusammenwirkt, um die Neigungs- und Halteeinrichtung aufzunehmen.

3. Blendschutzsystem nach Anspruch 2, bei dem die Heigungs- und Halteeinrichtung einen im wesentlichen Cförmigen länglichen Federbügel (80) aufweist, der so geformt ist, daß er in die zweite Öffnung (37,-) des Gehäuses (35,45) eingepaßt werden kann.

4. Blendschutzsystem nach Anspruch 3, bei dem der Bügel (80) einen Schenkel (81) aufweist, der sich über einen Sehnen-Abschnitt der ersten Öffnung (36) erstreckt, und bei dem die Achseinrichtung (53) eine Abflachung (56) aufweist, die mit dem Schenkel des Bügels ausgerichtet ist, wenn die zweite Sonnenblende (20) in der gelagerten Stellung ist.

5. Blendschutzsystem nach Anspruch 4, bei dem ein vom Schenkel (81) fernliegendes Ende des Bügels (80) eine nach innen hervorstehende Lippe (82) aufweist, die auf einem Absatz (39) des Gehäuses aufgenommen wird, und so den Bügel an der Halterung festhält.

6. Blendschutzsystem nach einem der vorhergehenden Ansprüche mit einer Platte (60), die an dem Hauptteil (50) befestigt ist, für eine Gleitbewegung entlang einer zu einer Längsachse der zweiten Sonnenblende (20) parallelen Achse zwischen einer zumindest teilweise mit dem Hauptteil ausgerichteten gelagerten Stellung und Benutzungsstellungen, in denen die Platte (60) sich von einer gewählten Seite des Hauptteils aus erstreckt.

7. Blendschutzsystem nach einem der vorhergehenden Ansprüche, bei dem jede der Halterungen (30,40) eine zusätzliche Öffnung zur Aufnahme von Halteelementen der ersten Sonnenblende (10) aufweist, so daß sowohl die zweite Sonnenblende (20) als auch die erste Sonnenblende (10) von den Halterungen gehalten werden.

8. Blendschutzsystem nach einem der vorhergehenden Ansprüche in Abhängigkeit von Anspruch 6, bei dem die Platte (60) am Hauptteil (50) durch ineinandergreifende Armeinrichtungen (66,59) befestigt ist, die sich von gegenüberliegenden Flächen des Hauptteils und der Platte aus erstrecken, und die ineinandergreifen, um die Platte und den Hauptteil zusammenzuhalten.

9. Blendschutzsystem nach einem der vorhergehenden Ansprüche in Abhängigkeit von Anspruch 6, bei dem die Platte (60) am Hauptteil (50) befestigt wird durch eine entweder im Hauptteil (50) oder der Platte (60) entlang der Richtung der Gleitbewegung angebrachte im wesentlichen konkave Nut (55), und einem komplementären in dem verbleibenden Teil von Hauptteil und Platte befindlichen im wesentlichen konvexen Vorsprung (65), der so ausgebildet ist, daß er in die Nut eingreift, um dazwischen eine Gleitführung zu bilden.

10. Blendschutzsystem nach Anspruch 9, bei dem die Nut (55) und der Vorsprung (65) im wesentlichen halbzylindrisch sind.

11. Blendschutzsystem nach den Ansprüchen 9 und 10, bei dem ein Paar beabstandeter paralleler halbzylindrischer Nuten (55) und ein entsprechendes Paar beabstandeter paralleler Vorsprünge (65) vorgesehen sind.

12. Blendschutzsystem nach Anspruch 11, bei dem die Nuten und Vorsprünge angrenzend an gegenüberliegende Kanten der zweiten sonnenblende (20) gebildet sind.

13. Blendschutzsystem nach einem der Ansprüche 9 bis 12, bei dem die Nut (55) in dem Hauptteil (50) und der Vorsprung in der Platte (60) gebildet ist.

14. Blendschutzsystem nach einem der vorhergehenden Ansprüche, bei dem die erste Sonnenblende (10) schwenkbar mit einer der Halterungen (30) für eine Bewegung in einer im wesentlichen horizontalen Richtung verbunden ist, um wahlweise einen Sonnenschutz für ein Seitenfenster (15) zu bilden.

## Revendications

1. Système de pare-soleil pour véhicule comprenant un premier pare-soleil (10) et un second paresoleil (20) montés sur deux supports (30, 40) qui peuvent être fixés à distance l'un de l'autre au-dessus d'une fenêtre de véhicule (14); dans lequel le second pare-soleil (20) comprend un corps généralement plan (50) et des pivots (53) qui dépassent des côtés opposés du corps, à proximité d'un bord supérieur de celui-ci; et un moyen de sollicitation élastique et de retenue comprenant une attache à ressort qui s'étend entre les pivots (53) et les chapes (30, 40) pour solliciter le second pare-soleil (20) en vue de lui permettre de se déplacer brusquement sous l'effet d'un ressort vers une position de rangement relevée adjacente au toit du véhicule et pour retenir le second pare-soleil dans une position d'utilisation abaissée sélectionnée.

2. Système de pare-soleil suivant la revendication 1, dans lequel chacun des supports (30, 40) comprend une chape (35, 45) présentant une première ouverture généralement cylindrique (36, 46) destinée à recevoir un pivot, et une seconde ouverture (37, -) qui s'étend transversalement à l'ouverture destinée à recevoir le pivot et qui communique avec celle-ci pour recevoir le moyen de sollicitation élastique et de retenue.

3. Système de pare-soleil suivant la revendication 2, dans lequel le moyen de sollicitation élastique et de retenue comprend une attache à ressort oblongue généralement en forme de C (80), façonnée pour s'ajuster dans la seconde ouverture (37, -) de la chape (35, 45).

4. Système de pare-soleil suivant la revendication 3, dans lequel l'attache (80) comprend une aile (81) qui s'étend suivant un segment de corde de la première ouverture (36) et dans lequel le pivot (53) comprend un méplat (56) qui est aligné avec l'aile de l'attache lorsque le second pare-soleil (20) est en position de rangement.

5. Système de pare-soleil suivant la revendication 4, dans lequel une extrémité de l'attache (80) éloignée de l'aile (81) comprend une lèvre (82) en saillie vers l'intérieur reçue sur un appui (39) de la chape, de manière à fixer l'attache à la chape.

6. Système de pare-soleil suivant l'une quelconque des revendications précédentes, comprenant un panneau (60) monté sur le corps (50) afin de coulisser suivant un axe parallèle à un axe longitudinal du second pare-soleil (20) entre une position de rangement au moins partiellement en ligne avec le corps et des positions d'utilisation dans lesquelles le panneau (60) s'étend à partir d'un côté sélectionné du corps.

7. Système de pare-soleil suivant l'une quelconque des revendications précédentes, dans lequel chacun des supports (30, 40) comprend une ouverture supplémentaire pour recevoir des organes de support du premier pare-soleil (10), de telle sorte que le second paresoleil (20) et le premier pare-soleil (10) soient supportés par les supports.

8. Système de pare-soleil suivant l'une quelconque des revendications précédentes découlant de la revendication 6, dans lequel le panneau (60) est monté sur le corps (50) par des languettes à emboîtement (66, 59) qui s'étendent depuis les surfaces du corps et du panneau qui se font face et qui s'emboîtent mutuellement pour retenir le panneau et le corps assemblés.

9. Système de pare-soleil suivant l'une quelconque des revendications précédentes découlant de la revendication 6, dans lequel le panneau (60) est monté sur le corps (50) par une rainure généralement concave (55) ménagée dans le corps (5) ou le panneau (60) dans le sens du mouvement de coulissement et par une nervure complémentaire généralement convexe (65) ménagée dans l'autre de ces deux éléments et destinée à être engagée dans la rainure pour former une glissière de guidage entre eux.

10. Système de pare-soleil suivant la revendication 9, dans lequel la rainure (55) et la nervure (65) sont généralement semi-cylindriques.

11. Système de pare-soleil suivant les revendications 9 et 10, dans lequel une paire de rainures semi-cylindriques parallèlement espacées (55) et une paire correspondante de nervures parallèles et espacées (65) sont prévues.

12. Système de pare-soleil suivant la revendication 11, dans lequel les rainures et les nervures sont formées à proximité de bords opposés du second paresoleil (20).

13. Système de pare-soleil suivant l'une quelconque des revendications 9 à 12, dans lequel la rainure (55) est ménagée dans le corps (50) et la nervure est ménagée dans le panneau (60).

14. Système de pare-soleil suivant l'une quelconque des revendications précédentes, dans lequel le premier pare-soleil (10) est articulé à un des supports (30) de manière à se déplacer dans une direction généralement horizontale pour sélectivement arrêter les rayons solaires traversant une fenêtre latérale (15).
